# EUROPÄISCHE PATENTSCHRIFT

(11) **EP 3 490 760 B1**
(45) Veröffentlichungstag und Bekanntmachung des Hinweises auf die Patenterteilung: **22.04.2020**
(21) Anmeldenummer: 17749382.2
(22) Anmeldetag: 19.07.2017
(51) Int. Cl.: B25J 9/16, B25J 19/00, G01B 21/24, G01D 11/24, G01D 5/244

(54) **EINSTECKADAPTER, JUSTAGEINSTRUMENT UND ZUGEHÖRIGER ROBOTER**
PLUG-IN ADAPTER, ADJUSTMENT INSTRUMENT, AND ASSOCIATED ROBOT
ADAPTATEUR D'INSERTION, INSTRUMENT D'AJUSTEMENT ET ROBOT ASSOCIÉ

(30) Priorität: 28.07.2016 DE 102016213965
(43) Veröffentlichungstag der Anmeldung: 05.06.2019
(73) Patentinhaber: KUKA Deutschland GmbH, 86165 Augsburg (DE)
(72) Erfinder: TSCHARNUTER, Dietmar, 86316 Friedberg (DE); NITZ, Gernot, 86368 Gersthofen (DE); BRÄNDLE, Gerhard, 86637 Wertingen (DE)
(74) Vertreter: Tillmann, Axel
(86) Internationale Anmeldenummer: PCT/EP2017/068188
(87) Internationale Veröffentlichungsnummer: WO 2018/019673

(56) Entgegenhaltungen:
- EP-A1- 0 006 160
- EP-A2- 2 808 655
- CN-A- 102 975 208
- DE-A1- 3 832 457
- DE-U1-202009 017 089
- JP-A- H0 577 177

## Beschreibung

Die Erfindung betrifft einen Einsteckadapter, aufweisend ein Gewinde, das zum Verschrauben des Einsteckadapters mit einem Justageinstrument ausgebildet ist. Ein zugehöriges Justageinstrument weist eine Messspitze auf, die in einem an eine Gegensteckvorrichtung eines Roboters angekoppelten Zustand des Einsteckadapters und des Justageinstruments an einem Stiftende einer Tastspitze des Einsteckadapters ansteht, wenn die Tastspitze eine Referenzstellungsmarkierung des Roboters abtastet. Die Erfindung betrifft außerdem einen zugehörigen Roboter, der diese Gegensteckvorrichtung aufweist.

Aus der EP 0 006 160 A1 ist eine Vorrichtung zur exakten und reproduzierbaren Einstellung zweier sich durchdringender mechanischer Teile, wie Glieder eines Roboters, bekannt. Das spezielle Anwendungsgebiet betrifft sogenannte Industrieroboter oder Handhabungsgeräte, die über ein programmgesteuertes, elektromotorisch angetriebenes Gelenksystem bestimmte reproduzierbare Bewegungen ausführen. Bei diesen Industrierobotern müssen beispielsweise im Falle eines Austauschs oder einer Nachjustierung der Wegmeßsysteme, wie beispielsweise Resolver an den Roboterachsen, diese in eine sogenannte Nullstellung gebracht werden, woran anschließend das Wegmeßsystem seinerseits gegebenenfalls auch in eine sogenannte elektrische Nullstellung gebracht wird.

Aus der DE 20 2009 017 089 U1 ist ein elektronisches Messgerät bekannt, das ein Justageinstrument bildet und ein Gehäuse, eine innerhalb des Gehäuses angeordnete Messelektronik und eine fest mit dem Gehäuse verbundene oder in das Gehäuse integrierte Dreheinrichtung zum Lösen und/oder Festziehen von Schrauben aufweist. Im Falle des dortigen Ausführungsbeispiels weist das Messgerät einen an der Stirnseite des Gehäuses, das auch ein Innengewinde umfasst, eine mit einer Elektronik verbundene Tastspitze auf. Die Tastspitze ist in diesem Falle ein Wegaufnehmer, dessen Signale von der Messelektronik verarbeitet werden. Die verarbeiteten Signale werden über eine Verbindungsleitung an eine Steuervorrichtung übermittelt. Der dort beschriebene Industrieroboter weist seinen Drehachsen bzw. Gelenken zugeordnete profilierte Kerben oder Nuten auf, mit denen die Tastspitze während einer der Justage zugeordneten Bewegung des relevanten Gliedes in Kontakt steht. Aufgrund der Profilierung der Kerben bzw. Nuten ergibt sich ein der Profilierung entsprechendes, von der Tastspitze erzeugtes Signal bzw. von der Elektronik erzeugtes Signal, aufgrund dessen die Steuervorrichtung automatisch die Justage der aktuellen Drehachse bzw. Gelenk bzw. der zugeordneten Winkelgeber durchführen kann.

Die EP 2808 655 zeigt mit eine Kalibrierungsvorrichtung mit einem Kalibriersensor, der eine Längsachse hat, und der eine elektrische Anschlussbuchse aufweist, der mit einer Schraubendreherklinge versehen ist, die von einer Stirnfläche in Richtung der Längsachse vorsteht; mit einem Stecker zum Einstecken in die Anschlussbuchse der mit einem Anschlusskabel verdrehfest verbunden ist, wobei auf dem Stecker eine Positionierhilfseinrichtung angeordnet ist, die eine Anlagefläche aufweist, die mit einer komplementär ausgebildeten Gegenfläche der Schraubendreherklinge zusammenwirkt.

Die DE38 32 457 A1 zeigt ein Verfahren und eine Vorrichtung zur absoluten Positionsbestimmung an einer Achse, insbesondere einer Drehachse mit einem zyklisch absoluten Positionsgeber.

Die JP H05 77177 A zeigt ein Verfahren zur Indexierung und Anzeige der Bewegung der beweglichen Teile eines Roboters.

Die CN 102 975 208 A zeigt eine Vorrichtung zur Null-Kalibrierung eines Schweißroboters, wobei ein erster Arm eine V-förmige Nut aufweist, und in einer Null-Stellung mit einem zweiten Arm wenigstens ein Teil der Nut von einer Detektionsvorrichtung detektiert werden kann.

Aufgabe der Erfindung ist es, eine Vorrichtung und einen entsprechend angepassten Roboter zu schaffen, wodurch ein Justageinstrument auf einfache Weise, insbesondere in kurzer Zeit und mit wenig Arbeitsaufwand, zur Durchführung einer Justage einer Referenzstellung an wenigstens einem Gelenk des Roboters, an den Roboter angeschlossen werden kann.

Die Aufgabe der Erfindung wird gelöst durch einen Einsteckadapter, aufweisend:
- ein Gewinde, das zum Verschrauben des Einsteckadapters mit einem Justageinstrument ausgebildet ist,
- eine Steckvorrichtung, die zum lösbaren Verbinden des Einsteckadapters an eine Gegensteckvorrichtung einer Zugangsöffnung an einem Roboter zu einer Referenzstellungsmarkierung des Roboters ausgebildet ist, und
- einen Taststift, der zum Ankoppeln einer Messspitze des Justageinstruments an die Referenzstellungsmarkierung ausgebildet ist, wobei die Steckvorrichtung einen Steckabschnitt aufweist, der zum axialen Anstecken des Steckabschnitts an die Gegensteckvorrichtung des Roboters ausgebildet ist.

Industrieroboter weisen mehrere Glieder und die Glieder gegeneinander verstellbare Gelenke auf. Die Gelenke selbst oder die Drehachsen, um welche sich die Gelenke drehen können, werden u.a. auch als Roboterachsen bezeichnet. Jedem Gelenk ist ein Drehwinkelsensor zugeordnet, der beispielsweise als ein sogenannter Resolver oder als ein Inkrementalgeber ausgebildet sein kann. Mittels einer Robotersteuerung, die Antriebe ansteuert, welche auch Motoren umfassen, die an dem Roboterarm angeordnet sind, um die Gelenke bewegen zu können, und unter Berücksichtigung der Messwerte der Drehwinkelsensoren, ist es erst möglich, jedes Gelenk des Roboterarms automatisch durch die Robotersteuerung angesteuert in gewünschte Drehwinkelstellungen zu bringen. Um jedes Gelenk sehr genau und reproduzierbar einstellen zu können, muss vor einer Inbetriebnahme eines Roboters und in zeitlichen Abständen wiederholt festgestellt werden, ob die Messwerte der Drehwinkelsensoren auch der tatsächlichen Winkelstellung des Gelenks bzw. der Roboterachse entsprechen. Bei eventuellen Abweichungen, die positionierrelevante Größen annehmen, müssen die Drehwinkelsensoren erneut auf die tatsächliche Winkelstellung des Gelenks bzw. der Roboterachse justiert bzw. nachjustiert werden.

Die Referenzstellung kann im Allgemeinen eine beliebige vorbestimmte Stellung des betreffenden Gelenkes sein. In einer speziellen Ausgestaltung ist die Referenzstellung eine sogenannte Nullstellung des betreffenden Gelenkes, d.h. diejenige Stellung, in der das Gelenk in seiner Nullstellung steht. Die Nullstellung kann im Falle eines Drehgelenks bspw. die Null-Grad-Winkelstellung des Gelenks sein. Die (reale) Nullstellung des Gelenkes kann ggf. auch geringfügig von einer idealen, d.h. exakten Null-Grad-Stellung des Gelenks abweichen. Insoweit kann auch die im Weiteren erwähnte Referenzstellungsmarkierung in den jeweiligen speziellen Ausführungsformen auch eine Nullstellungsmarkierung sein. Referenzstellungsmarkierungen, wie bspw. Justagekerben müssen somit nicht immer genau den Nullpunkt darstellen. Zunächst einmal kann jeder beliebige Wert zugewiesen werden. Darüber hinaus können nach der Vermessung des vorläufig justierten Robotersystems die Nullpunkte in der Steuerung neu berechnet werden. Dann wird die Lage der Justagekerben bezogen auf diese vermessenen Nullpunkte ermittelt und als Referenzwerte abgespeichert, die der jeweiligen Achse bei der Justage zugewiesen werden. So können auch fertigungsbedingte, zumeist kleine Abweichung mit eingerechnet werden. Das spart Kosten und Zeit, weil die Justagekerben einfach angebracht werden und sie nicht hin und her versetzt werden müssen, um einem bestimmten, exakten Wert zu entsprechen.

Ein Justieren der Drehwinkelsensoren eines Roboters auf die tatsächlichen Winkelstellungen seiner Gelenke erfolgt üblicherweise dadurch, dass das in Betracht gezogene Gelenk in eine vorbestimmt Grundstellung gebracht wird, die auch als Nullstellung des Gelenks bezeichnet wird. Dies bedeutet, dass in der Nullstellung das Gelenk definitionsgemäß den Drehwinkelwert von Null Grad aufweist bzw. aufweisen soll.

Die Drehwinkelsensoren, insbesondere die Resolver oder die Inkrementalgeber, können entweder mechanisch auf diese Referenzstellung, insbesondere diese Nullstellung des jeweiligen Gelenks eingerichtet werden, oder die Messwerte, die bspw. die jeweiligen Drehwinkelsensoren oder Inkrementalgeber in der mechanischen Referenzstellung oder Nullstellung des betreffenden Gelenks liefern, können beispielsweise in der Robotersteuerung den diesbezüglichen Null-(Winkel-)grad-Stellung steuerungstechnisch zugeordnet bzw. zugewiesen werden. Eine Justage erfolgt im Allgemeinen abtriebsseitig des Getriebes des betreffenden Gelenks zwischen zwei sich gegeneinander verstellenden Strukturteilen des Gelenks. Das Gelenk muss nicht notwendiger Weise ein Drehgelenk sein, sondern das Gelenk kann vielmehr auch ein Schiebegelenk/Schubgelenk, d.h. ein linear verstellbares Gelenk, wie bspw. eine Linearachse sein.

Um jedoch ein in Betracht gezogenes Gelenk erst einmal genau in diese mechanische Referenzstellung zu bringen, wird üblicherweise ein an sich prinzipiell bekanntes Justageinstrument verwendet.

Jedes Gelenk des Roboters umfasst ein in der kinematischen Kette des Roboterarms dem Gelenk unmittelbar vorgelagertes Glied und ein dem Gelenk unmittelbar nachgelagertes Glied. Eines dieser beiden Glieder weist eine Referenzstellungsmarkierung auf, die beispielsweise eine mechanische Kerbe auf einer kreiszylindrischen Mantelwand dieses Gliedes sein kann. Das andere Glied weist eine Zugangsöffnung auf, über welche die Referenzstellungsmarkierung des anderen Glieds für das Justageinstrument zugänglich ist. Jedem Gelenk des Roboterarms sind jeweils eine solche Referenzstellungsmarkierung und jeweils eine solche Zugangsöffnung zugeordnet.

Üblicherweise wird das Justageinstrument nur kurzzeitig an dem Roboter angebracht und insbesondere während des bestimmungsgemäßen Gebrauchs des Roboters von diesem entfernt. Außerdem wird generell nur ein einziges Justageinstrument verwendet, um alle Gelenke des Roboterarms zu vermessen, d.h. auf dessen jeweilige Referenzstellung einzustellen. Dies bedeutet, dass das Justageinstrument zu Beginn jeden Justiervorgangs an die erste Zugangsöffnung und dann nacheinander an alle folgenden Zugangsöffnungen angebracht werden muss, d.h. das Justageinstrument muss mehrfach von Zugangsöffnungen entfernt und wieder angebracht werden. Bisher ist es bekannt, an jeder Zugangsöffnung ein Feingewinde vorzusehen, welches mit einem entsprechenden Feingewinde des Justageinstruments korrespondiert, so dass das Justageinstrument mehrfach an den Roboterarm angeschraubt und wieder abgeschraubt werden kann. Dies ist insbesondere deshalb sehr aufwändig, da zum Justageinstrument, das generell eine elektrische bzw. elektronische Messvorrichtung sein kann, auch eine elektrische Verbindungsleitung gehören kann, die das Justageinstrument beispielsweise mit der Robotersteuerung verbindet. Aufgrund einer Ankopplung des Justageinstruments an die Zugangsöffnungen mittels der Feingewinde, ist es eigentlich unumgänglich außerdem die elektrische Verbindungsleitung jedes Mal abzustecken und wieder anzustecken.

Indem der erfindungsgemäße Einsteckadapter einerseits ein Gewinde aufweist, durch das der Einsteckadapter an das Justageinstrument angeschraubt werden kann und andererseits eine Steckvorrichtung aufweist, durch die der Einsteckadapter schnell und einfach an Gegensteckvorrichtungen der Zugangsöffnungen des Roboters angesteckt werden kann, kann ein aufwändiges Anschrauben und Abschrauben entfallen, gleichzeitig jedoch auch das Justageinstrument selbst unverändert bleiben und beispielsweise auch weiterhin bei Robotern verwendet werden, die keine entsprechenden Gegensteckvorrichtungen aufweisen.

Mit der erfindungsgemäßen Lösung können auch die an jedem Gelenk des Roboters bisher vorhandenen mehreren Taststifte (ein Taststift je Gelenk) entfallen und nur ein einziger Taststift wird verwendet, der zudem in den Einsteckadapter verlagert wird. So muss am Roboter an jeder Achse, d.h. an jedem Gelenk nur eine Hülse, d.h. eine Zugangsöffnung mit Gegensteckvorrichtung, aber ohne Taststift und ohne Feder, vorgesehen werden. Die Feder zum Rückzug des Taststiftes kann ganz entfallen. Der Einsteckadapter wird in das Justagewerkzeug angeschraubt und dann in die Hülse bzw. die Gegensteckvorrichtung eingesteckt. Die Passung zwischen der Steckvorrichtung des Einsteckadapters und der Gegensteckvorrichtung soll sehr eng sein, so dass der Verlust an Genauigkeit bei der Justage im Vergleich mit einer fest eingebauten Justagepatrone kaum merklich oder gar nicht vorhanden ist. Statt eines Gewindes kann in die Passfläche des Einsteckadapters eine Nutkurve gefräst sein, die zusammen mit einem Sperrstift in der Hülse die Verriegelung des Einsteckadapters beispielsweise im Sinne eines Bajonettverschlusses mit beispielsweise etwa einer halben Umdrehung gestattet. Die Innenfläche der Hülse wird durch einen Deckel mit Bajonettverschluss vor Verschmutzung geschützt, wenn der Einsteckadapter nicht eingesteckt ist. Der Deckel hat einen Schlitz und wird mit der Klinge des Justagewerkzeugs gelöst und angezogen. Die Steigung der Nutkurve und des Gewindes des Justageinstruments sind so abgestimmt, dass der Einsteckadapter generell aus der Hülse gelöst werden kann, ohne dass das Justagewerkzeug sich vom Einsteckadapter losdreht. Zum Lösen des Einsteckadapters aus dem Justagewerkzeug kann beispielsweise ein Sechskant auf der Außenfläche des Einsteckadapters vorgesehen sein, der mit einem Maulschlüssel oder einer Zange gegriffen werden kann.

Die Steckvorrichtung, die zum lösbaren Verbinden des Einsteckadapters an eine Gegensteckvorrichtung einer Zugangsöffnung an einem Roboter zu einer Referenzstellungsmarkierung des Roboters ausgebildet ist, kann demgemäß beispielsweise in Art eines Bajonettverschlusses ausgebildet sein.

Außerdem weist der Einsteckadapter einen Taststift auf, der zum Ankoppeln einer Messspitze des Justageinstruments an die Referenzstellungsmarkierung ausgebildet ist, wobei die Steckvorrichtung einen Steckabschnitt aufweist, der zum axialen Anstecken des Steckabschnitts an die Gegensteckvorrichtung des Roboters ausgebildet ist. So können am Roboter auch die dortigen Taststifte entfallen, die bisher, federvorgespannt, an jeder einzelnen Zugangsöffnung am Roboterarm notwendig waren.

Der Steckabschnitt kann eine kreiszylindrische Mantelwand aufweisen, die eine Passfläche bildet, welche in einem an die Gegensteckvorrichtung des Roboters angekoppelten Zustand des Einsteckadapters mit einer Gegenpassfläche der Gegensteckvorrichtung zusammenwirkt, so dass der Einsteckadapter mit einer hinsichtlich der Messgenauigkeit des Justageinstruments hinreichenden Genauigkeit an der Gegensteckvorrichtung gelagert ist. Die Passfläche und die Gegenpassfläche sind hinsichtlich Ihrer Größen und Maßtoleranzen derart aufeinander abgestimmt, dass der Einsteckadapter und folglich auch das mit ihm verbundene Justageinstrument derart genau an der jeweiligen Zugangsöffnung gehalten ist, dass eine Messung in einer erforderlichen Messgenauigkeit durchgeführt werden kann. Mit anderen Worten darf der Einsteckadapter und folglich auch das mit ihm verbundene Justageinstrument in einem an der Zugangsöffnung angesteckten Zustand nicht so viel Spiel haben, d.h. so sehr wackeln, dass die Messung dadurch wertlos werden würde.

Der Einsteckadapter kann ein Sicherungsmittel aufweisen, das ausgebildet ist, den Einsteckadapter in seinem an die Gegensteckvorrichtung des Roboters angekoppelten Zustand gegen unbeabsichtigtes Lösen von der Gegensteckvorrichtung zu sichern.

Das Sicherungsmittel kann wenigstens ein formschlüssiges Verbindungsmittel umfassen, das manuell lösbar ist. Das Verbindungsmittel kann beispielsweise, im Falle einer Verbindung in Art eines Bajonettverschlusses von zwei gegenüberliegenden Vorsprüngen gebildet werden, die in einer Verriegelungsstellung in entsprechende Rücksprünge eingreifen, aus denen sie wieder gelöst werden können, beispielsweise durch eine Drehbewegung. Das Sicherungsmittel kann aber auch wenigstens eine Schnapp-Rastverbindung aufweisen, der der wenigstens ein Rastvorsprung in wenigstens einen Rastrücksprung eingreift. Der Rastvorsprung und/oder der Rastrücksprung können, beispielsweise mittels eines Federelements elastisch vorgespannt gelagert sein. Die Federelemente können beispielsweise mittels eines Tastabschnitts manuell lösbar sein, um den jeweiligen Rastvorsprung von dem Rastrücksprung lösen zu können, wenn der Einsteckadapter und folglich das Justageinstrument vom Roboter entfernt werden soll.

Die Gegensteckvorrichtung kann einen Sperrstift aufweisen und die Steckvorrichtung, der Steckabschnitt, oder die kreiszylindrische Mantelwand des Steckabschnitts können dabei eine Nut aufweisen, die einen zumindest im Wesentlichen in axialer Richtung laufenden ersten Nutabschnitt aufweist und einen sich an den ersten Nutabschnitt anschließenden, zumindest im Wesentlichen quer zur axialen Richtung laufenden zweiten Nutabschnitt aufweist, in dem der Sperrstift in einer Verrieglungsstellung des Einsteckadapters eingreift.

Wird der Einsteckadapter mit seiner Steckvorrichtung in die Gegensteckvorrichtung eingeführt, so bewegt sich der wenigstens eine Sperrstift in dem ersten Nutabschnitt entlang und die Steckvorrichtung kann in axialer Richtung in die Gegensteckvorrichtung eingeführt werden. Ist die Steckvorrichtung vollständig in die Gegensteckvorrichtung eingeführt, kann der Einsteckadapter gedreht werden und der wenigstens eine Sperrstift wird in den zweiten Nutabschnitt gedrängt, der zumindest im Wesentlichen quer zur axialen Richtung verläuft, so dass der Einsteckadapter an der Gegensteckvorrichtung dadurch formschlüssig verriegelt wird.

Die Nut, insbesondere der zweite Nutabschnitt kann eine Steigung aufweisen, die größer ist, als die Steigung des am hinteren Ende des Gehäuses angeordneten Gewindes.

Indem die Nut, insbesondere der zweite Nutabschnitt eine Steigung aufweist, die größer ist, als die Steigung des am hinteren Ende des Gehäuses angeordneten Gewindes, kann sichergestellt werden, dass bei einem Losdrehen des Justageinstruments von der Zugangsöffnung des Roboters stets auch der Einsteckadapter zusammen mit dem Justageinstruments losgedreht wird und nicht in unerwünschter Weise sich die Schraubverbindung zwischen Justageinstrument und Einsteckadapter löst und der Einsteckadapter ungewollt an der Zugangsöffnung des Roboters verbleibt.

Der zweite Nutabschnitt kann sich in einem Winkel von weniger als 360 Grad, insbesondere weniger als 180 Grad über den Umfang der Mantelwand des Steckabschnitts erstrecken. Indem sich der zweite Nutabschnitt in einem Winkel von weniger als 360 Grad, insbesondere weniger als 180 Grad über den Umfang der Mantelwand des Steckabschnitts erstreckt, kann eine vollständige Entriegelung bzw. eine vollständige Verriegelung des Einsteckadapters an der Zugangsöffnung des Roboters durch eine Drehbewegung des Einsteckadapters bzw. des Justageinstruments um weniger als 360 Grad, insbesondere weniger als 180 Grad erfolgen. Beispielsweise kann der zweite Nutabschnitt sich in einem Winkel von 180 Grad oder 90 Grad über den Umfang der Mantelwand des Steckabschnitts erstrecken, so das eine vollständige Entriegelung bzw. eine vollständige Verriegelung des Einsteckadapters an der Zugangsöffnung des Roboters durch eine Drehbewegung des Einsteckadapters bzw. des Justageinstruments um 180 Grad bzw. 90 Grad erfolgen kann, also durch eine halbe Umdrehung oder eine viertel Umdrehung.

Der Einsteckadapter kann ein Gehäuse aufweisen, mit einem vorderen Ende und einem hinteren Ende, wobei das Gewinde am hinteren Ende des Gehäuses angeordnet ist, die Steckvorrichtung am vorderen Ende des Gehäuses angeordnet ist, und der Taststift im Gehäuse des Einsteckadapters axial verstellbar gelagert ist, wobei der Taststift eine Tastspitze und ein der Tastspitze gegenüberliegendes Stiftende aufweist und der Taststift ausgebildet ist, in einem an die Gegensteckvorrichtung des Roboters angekoppelten Zustand des Einsteckadapters die Referenzstellungsmarkierung mit seiner Tastspitze zu ertasten und das Stiftende ausgebildet ist, einen Sitz zu bilden, an dem eine Messspitze des Justageinstruments in einem an den Einsteckadapter angeschraubten Zustand des Justageinstruments ansteht.

Der Einsteckadapter kann ein Gehäuse aufweisen, das eine Außenkontur, insbesondere in Form eines Außensechskants oder eines Außenvierkants aufweist, die ausgebildet ist, einen Drehansatz für einen Maulschlüssel zu bilden, insbesondere um Lösen des Einsteckadapters von dem Justageinstrument.

Die erfindungsgemäße Aufgabe wird außerdem gelöst durch ein Justageinstrument mit einer Messspitze, wobei das Justageinstrument ein Gegengewinde aufweist und das Justageinstrument einen Einsteckadapter nach einem oder mehreren der beschriebenen Ausführungen aufweist, indem der Einsteckadapters mit seinem Gewinde an das Gegengewinde des Justageinstruments angeschraubt ist.

Zur Erfindung gehört außerdem ein Roboter mit mehreren Gliedern, die Glieder gegeneinander verstellbaren Gelenken, und wenigstens einer Zugangsöffnung zu einer Referenzstellungsmarkierung wenigstens eines der Gelenke des Roboters, der eine Gegensteckvorrichtung aufweist, die zum Ankoppeln eines Einsteckadapters nach einem oder mehreren der beschriebenen Ausführungen ausgebildet ist.

Der Roboter kann einen Arm aufweisen, der die automatisch bewegbaren Teile des Roboters bildet, der neben diesem Roboterarm eine programmierbare Robotersteuerung aufweisen kann. An einem Roboterflansch des Roboterarms kann als ein Endeffektor ein Werkzeug angeordnet sein. Das Werkzeug kann mit unterschiedlichen Medien zu versorgen sein, die über eine Versorgungsleitung von dem Roboterarm zu dem Werkzeug geführt werden können.

Roboterarme mit zugehörigen programmierbaren Robotersteuerungen, insbesondere Industrieroboter sind demgemäß Arbeitsmaschinen, die zur automatischen Handhabung ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren über Gelenke verbundene Glieder und programmierbare Robotersteuerungen (Steuervorrichtungen) auf, die während des Betriebs die Bewegungsabläufe des Roboterarms automatisch steuern bzw. regeln, um einen Roboterflansch des Roboterarms im Raum zu positionieren und zu bewegen. Die Glieder werden dazu über Antriebsmotoren, insbesondere elektrische Antriebsmotoren, die von der Robotersteuerung angesteuert werden, insbesondere bezüglich der Bewegungsachsen des Industrieroboters, welche die Bewegungsfreiheitsgrade der Gelenke repräsentieren, bewegt. Der Roboter kann beispielsweise ein Industrieroboter sein, der insbesondere ein Knickarmroboter mit seriell in einer kinematischen Kette aufeinanderfolgenden Drehachsen, beispielsweise fünf, sechs oder sieben Drehachsen sein kann. Das Werkzeug kann demgemäß dadurch im Raum bewegt werden, dass die Gelenke des Roboterarms angesteuert durch die programmierbare Robotersteuerung bewegt, d.h. verstellt werden.

Ein Ausführungsbeispiel der Erfindung ist exemplarisch in den beigefügten schematischen Zeichnungen dargestellt. Konkrete Merkmale dieses Ausführungsbeispiels können unabhängig davon, in welchem konkreten Zusammenhang sie erwähnt sind, gegebenenfalls auch einzeln oder in anderen als den dargestellten Kombinationen betrachtet, allgemeine Merkmale der Erfindung darstellen.

Es zeigen:
- Fig. 1: eine perspektivische Ansicht eines beispielhaften Roboters mit einem Roboterarm und einer Robotersteuerung,
- Fig. 2: eine perspektivische Darstellung einer Gegensteckvorrichtung in Alleinstellung (separat vom Roboter) und eine zugeordnete Abdeckkappe für die Zugangsöffnung der Gegensteckvorrichtung,
- Fig. 3: eine perspektivische Darstellung eines erfindungsgemäßen Einsteckadapters mit separat dargestelltem Taststift, und
- Fig. 4: eine perspektivische Darstellung eines Einsteckadapters gemäß Fig. 3 in Alleinstellung und daneben in einem an ein Justageinstrument angeschraubten Zustand.

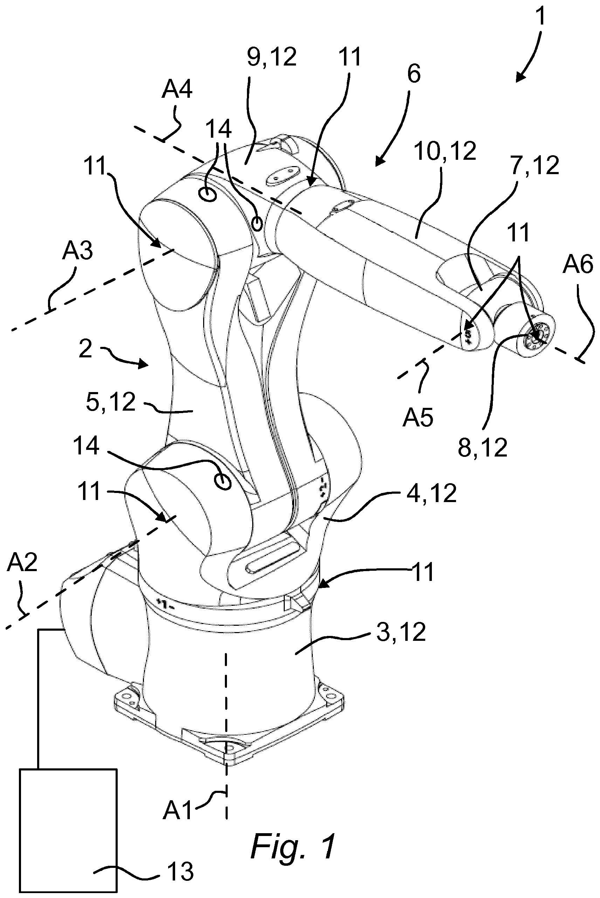

Die Fig. 1 zeigt einen Roboter 1, der einen Roboterarm 2 und eine Robotersteuerung 13 aufweist. Der Roboterarm 2 umfasst im Falle des vorliegenden Ausführungsbeispiels mehrere, nacheinander angeordnete und mittels Gelenke 11 verbundene Glieder 12. Bei den Gliedern 12 handelt es sich insbesondere um ein Gestell 3 und ein relativ zum Gestell 3 um eine vertikal verlaufende Achse A1 drehbar gelagertes Karussell 4. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Der Armausleger 6 weist im Falle des vorliegenden Ausführungsbeispiels ein schwenkbar an der Schwinge 5 gelagertes erstes Gehäusebauteil 9 auf. An dem ersten Gehäusebauteil 9 eines ersten Gliedes 12 ist ein zweites Gehäusebauteil 10 eines zweiten Gliedes 12 des Armauslegers 6 um die Achse A4 drehbar gelagert. Weitere Glieder des Roboterarms 2 sind im Falle des vorliegenden Ausführungsbeispiels neben der Schwinge 5, der Armausleger 6 und die vorzugsweise mehrachsige Roboterhand 7 mit einer als Anschlussflansch 8 ausgeführten Befestigungsvorrichtung zum Befestigen eines Endeffektors, wie beispielsweise eines Werkzeugs oder eines Greifers.

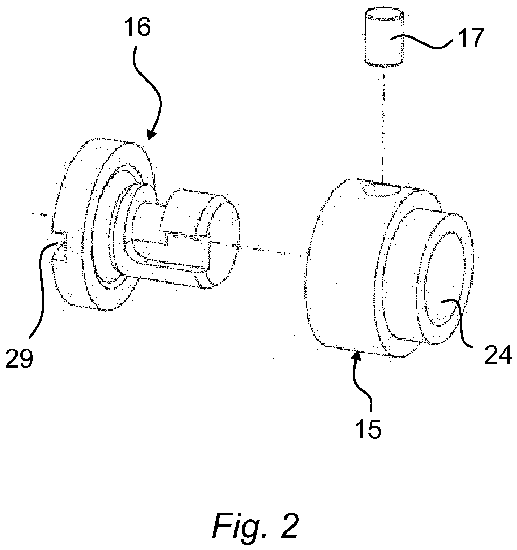

Der Roboter 1 weist im Falle des vorliegenden Ausführungsbeispiels an jedem seiner Gelenke 11 jeweils eine Zugangsöffnung 14 auf, von denen in Fig. 1 beispielhaft drei Zugangsöffnungen 14 dreier Gelenke 11 dargestellt sind. Die Zugangsöffnungen 14 geben Zugang zu jeweils einer (nicht dargestellten) Referenzstellungsmarkierung des jeweiligen Gelenks 11 des Roboters 1. Jede Zugangsöffnung 14 trägt eine Gegensteckvorrichtung 15, die in Fig. 2 in einer einzelnen Darstellung ohne den Roboter 1 gezeigt ist, zusammen mit einem Deckel 16 und einem Sperrstift 17.

Der Deckel 16 dient dazu, die Zugangsöffnung 14 zu verschließen, wenn das Justageinstrument 18 vom Roboter entfernt ist. Der Deckel 16 kann beispielsweise ein Eindringen von Staub in die Zugangsöffnung 14 verhindern und somit die Gegenpassfläche 24 der Gegensteckvorrichtung 15 vor Beschädigung schützen. Der Deckel 16 kann dazu, wie in Fig.2 dargestellt, eine der Steckvorrichtung 22 des Einsteckadapters 21 gleichartige Gestalt aufweisen und demgemäß auch mit einer Nut versehen sein, so dass der Deckel 16 gegen den Sperrstift 17 der Gegensteckvorrichtung 15 verriegelt werden kann. Zum Verriegeln und/oder Entriegeln des Deckels 16 an der Gegensteckvorrichtung 15 kann der Deckel 16 einen Schlitz 29 aufweisen, mittels dem der Deckel 16 mit einem Werkzeug, wie beispielsweise einem Schlitzschraubendreher gedreht werden kann.

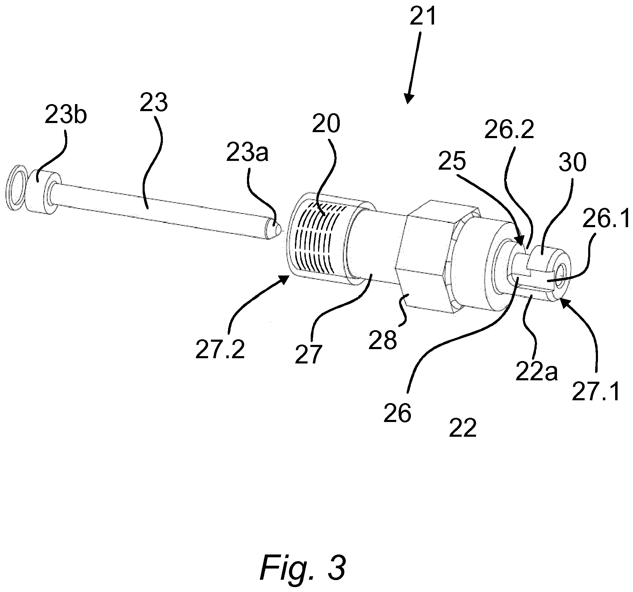

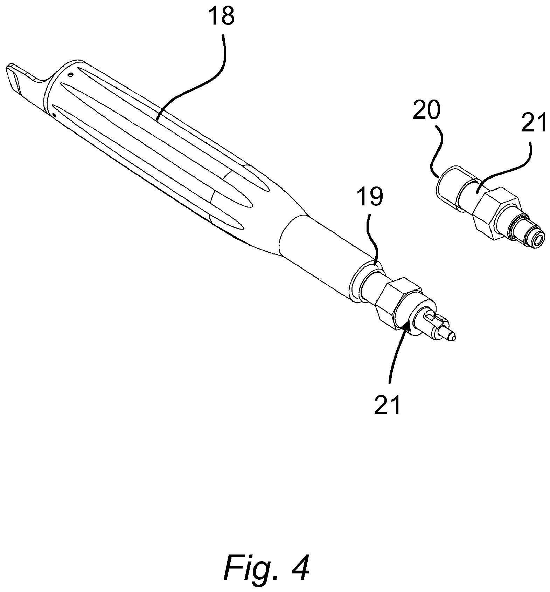

Die Gegensteckvorrichtung 15 ist zum Ankoppeln eines Einsteckadapters 21, wie in Fig. 3 und Fig. 4 gezeigt, ausgebildet.

Das Justageinstrument 18 gemäß Fig. 4 weist eine nicht näher dargestellte Messspitze und ein Gegengewinde 19 auf, das mit einem entsprechenden Gewinde 20 des erfindungsgemäßen Einsteckadapters 21 verschraubbar ist, um den Einsteckadapters 21 an das Justageinstrument 18, wie in Fig. 4 dargestellt, anzukoppeln.

Der Einsteckadapter 21 gemäß Fig. 3 und Fig. 4 weist auf:
- das Gewinde 20, das zum Verschrauben des Einsteckadapters 21 mit dem Justageinstrument 18 (Fig. 4) ausgebildet ist,
- eine Steckvorrichtung 22, die zum lösbaren Verbinden des Einsteckadapters 21 an der Gegensteckvorrichtung 15 einer Zugangsöffnung 14 an einem Roboter 1 zu einer Referenzstellungsmarkierung des Roboters 1 ausgebildet ist, und
- einen Taststift 23, der zum Ankoppeln einer Messpitze des Justageinstruments 18 an die Referenzstellungsmarkierung ausgebildet ist, wobei die Streckvorrichtung 22 einen Steckabschnitt 22a aufweist, der zum axialen Anstecken des Steckabschnitts 22a an die Gegensteckvorrichtung 15 des Roboters 1 ausgebildet ist.

Der Steckabschnitt 22a weist im Falle des vorliegenden Ausführungsbeispiels eine kreiszylindrische Mantelwand 30 auf, die eine Passfläche bildet, welche in einem an die Gegensteckvorrichtung 15 des Roboters 1 angekoppelten Zustand des Einsteckadapters 21 mit einer Gegenpassfläche 24 der Gegensteckvorrichtung 15 (Fig. 2) zusammenwirkt, so dass der Einsteckadapter 21 mit einer hinsichtlich der Messgenauigkeit des Justageinstruments 18 hinreichenden Genauigkeit an der Gegensteckvorrichtung 15 gelagert ist.

Der Einsteckadapter 21 weist im Falle des vorliegenden Ausführungsbeispiels ein Sicherungsmittel 25 auf, das ausgebildet ist, den Einsteckadapter 21 in seinem an die Gegensteckvorrichtung 15 des Roboters 1 angekoppelten Zustand gegen unbeabsichtigtes Lösen von der Gegensteckvorrichtung 15 zu sichern.

Dazu weist die Gegensteckvorrichtung 15 den Sperrstift 17 auf und die Steckvorrichtung 22, d.h. der Steckabschnitt 22a, bzw. die kreiszylindrische Mantelwand 30 des Steckabschnitts 22a weist eine Nut 26 auf, die einen zumindest im Wesentlichen in axialer Richtung laufenden ersten Nutabschnitt 26.1 aufweist und einen sich an den ersten Nutabschnitt 26.1 anschließenden, zumindest im Wesentlichen quer zur axialen Richtung laufenden zweiten Nutabschnitt 26.2 aufweist, in dem der Sperrstift 17 in einer Verrieglungsstellung des Einsteckadapters 21 eingreift.

Die Nut 26 bzw. der zweite Nutabschnitt 26.2 weist dabei eine Steigung auf, die größer ist, als die Steigung des am hinteren Ende des Gehäuses 27 des Einsteckadapters 21 angeordneten Gewindes 20.

Der zweite Nutabschnitt 26.2 erstreckt sich im Falle des vorliegenden Ausführungsbeispiels über einen Winkel von ca. 180 Grad über den Umfang der Mantelwand 30 des Steckabschnitts 22a hinweg.

Der Einsteckadapter 21 weist ein Gehäuse 27 auf, mit einem vorderen Ende 27.1 und einem hinteren Ende 27.2 , wobei das Gewinde 20 am hinteren Ende 27.2 des Gehäuses 27 angeordnet ist, die Steckvorrichtung 22 am vorderen Ende 27.1 des Gehäuses 27 angeordnet ist, und der Taststift 23 im Gehäuse 27 des Einsteckadapters 21 axial verstellbar gelagert ist, wobei der Taststift 23 eine Tastspitze 23a und ein der Tastspitze 23a gegenüberliegendes Stiftende 23b aufweist und der Taststift 23 ausgebildet ist, in einem an die Gegensteckvorrichtung 15 des Roboters 1 angekoppelten Zustand des Einsteckadapters 21 die Referenzstellungsmarkierung mit seiner Tastspitze 23a zu ertasten und das Stiftende 23b ausgebildet ist, einen Sitz zu bilden, an dem die Messspitze des Justageinstruments 18 in einem an den Einsteckadapter 21 angeschraubten Zustand (Fig. 4) des Justageinstruments 18 ansteht.

Das Gehäuse 27 des Einsteckadapter 21 weist eine Außenkontur auf, die im Falle des vorliegenden Ausführungsbeispiels in Form eines Außensechskants 28 ausgebildet ist, der einen Drehansatz beispielsweise für einen nicht dargestellten Maulschlüssel bildet, insbesondere um Lösen des Einsteckadapters 21 von dem Justageinstrument 18.

## Patentansprüche

1. Einsteckadapter, aufweisend:
- ein Gewinde (20), das zum Verschrauben des Einsteckadapters (21) mit einem Justageinstrument (18) ausgebildet ist,
- eine Steckvorrichtung (22), die zum lösbaren Verbinden des Einsteckadapters (21) an eine Gegensteckvorrichtung (15) einer Zugangsöffnung (14) an einem Roboter (1) zu einer Referenzstellungsmarkierung des Roboters (1) ausgebildet ist, und
- einen Taststift (23), der zum Ankoppeln einer Messspitze des Justageinstruments (18) an die Referenzstellungsmarkierung ausgebildet ist, wobei die Steckvorrichtung (22) einen Steckabschnitt (22a) aufweist, der zum axialen Anstecken des Steckabschnitts (22a) an die Gegensteckvorrichtung (15) des Roboters (1) ausgebildet ist.

2. Einsteckadapter nach Anspruch 1, **dadurch gekennzeichnet, dass** der Steckabschnitt (22a) eine kreiszylindrische Mantelwand (30) aufweist, die eine Passfläche bildet, welche in einem an die Gegensteckvorrichtung (15) des Roboters (1) angekoppelten Zustand des Einsteckadapters (21) mit einer Gegenpassfläche (24) der Gegensteckvorrichtung (15) zusammenwirkt, so dass der Einsteckadapter (21) mit einer hinsichtlich der Messgenauigkeit des Justageinstruments (18) hinreichenden Genauigkeit an der Gegensteckvorrichtung (15) gelagert ist.

3. Einsteckadapter nach Anspruch 1 oder 2, **dadurch gekennzeichnet, dass** der Einsteckadapter (21) ein Sicherungsmittel (25) aufweist, das ausgebildet ist, den Einsteckadapter (21) in seinem an die Gegensteckvorrichtung (15) des Roboters (1) angekoppelten Zustand gegen unbeabsichtigtes Lösen von der Gegensteckvorrichtung (15) zu sichern.

4. Einsteckadapter nach Anspruch 3, **dadurch gekennzeichnet, dass** die Gegensteckvorrichtung (15) einen Sperrstift (17) aufweist und die Steckvorrichtung (22), der Steckabschnitt (22a), oder die kreiszylindrische Mantelwand (30) des Steckabschnitts (22a) eine Nut (26) aufweist, die einen zumindest im Wesentlichen in axialer Richtung laufenden ersten Nutabschnitt (26.1) aufweist und einen sich an den ersten Nutabschnitt (26.1) anschließenden, zumindest im Wesentlichen quer zur axialen Richtung laufenden zweiten Nutabschnitt (26.2) aufweist, in dem der Sperrstift (17) in einer Verrieglungsstellung des Einsteckadapters (21) eingreift.

5. Einsteckadapter nach Anspruch 4, **dadurch gekennzeichnet, dass** die Nut (26), insbesondere der zweite Nutabschnitt (26.2) eine Steigung aufweist, die größer ist, als die Steigung des am hinteren Ende (27.2) des Gehäuses (27) angeordneten Gewindes (20).

6. Einsteckadapter nach Anspruch 5, **dadurch gekennzeichnet, dass** der zweite Nutabschnitt (26.2) sich in einem Winkel von weniger als 360 Grad, insbesondere weniger als 180 Grad über den Umfang der Mantelwand (30) des Steckabschnitts (22a) erstreckt.

7. Einsteckadapter nach einem der Ansprüche 1 bis 6, **dadurch gekennzeichnet, dass** der Einsteckadapter (21) ein Gehäuse (27) aufweist, mit einem vorderen Ende (27.1) und einem hinteren Ende (27.2), wobei das Gewinde (20) am hinteren Ende (27.2) des Gehäuses (27) angeordnet ist, die Steckvorrichtung (22) am vorderen Ende (27.1) des Gehäuses (27) angeordnet ist, und der Taststift (23) im Gehäuse (27) des Einsteckadapters (21) axial verstellbar gelagert ist, wobei der Taststift (23) eine Tastspitze (23a) und ein der Tastspitze (23a) gegenüberliegendes Stiftende (23b) aufweist und der Taststift (23) ausgebildet ist, in einem an die Gegensteckvorrichtung (15) des Roboters (1) angekoppelten Zustand des Einsteckadapters (21) die Referenzstellungsmarkierung mit seiner Tastspitze (23a) zu ertasten und das Stiftende (23b) ausgebildet ist, einen Sitz zu bilden, an dem eine Messspitze des Justageinstruments (18) in einem an den Einsteckadapter (21) angeschraubten Zustand des Justageinstruments (18) ansteht.

8. Einsteckadapter nach einem der Ansprüche 1 bis 7, **dadurch gekennzeichnet, dass** der Einsteckadapter (21) ein Gehäuse (27) aufweist, das eine Außenkontur, insbesondere in Form eines Außensechskants (28) oder eines Außenvierkants aufweist, die ausgebildet ist, einen Drehansatz für einen Maulschlüssel zu bilden, insbesondere um Lösen des Einsteckadapters (21) von dem Justageinstrument (18).

9. Justageinstrument mit einer Messspitze, und insbesondere mit einem dem Gewinde (20) des Einsteckadapters (21) nach einem der Ansprüche 1 bis 8 entsprechenden Gegengewinde (19), aufweisend einen Einsteckadapter (21) nach einem der Ansprüche 1 bis 8.

10. Roboter mit mehreren Gliedern(12), die Glieder (12) gegeneinander verstellbaren Gelenken (11), und wenigstens einer Zugangsöffnung (14) zu einer Referenzstellungsmarkierung wenigstens eines der Gelenke (11) des Roboters (1), aufweisend eine Gegensteckvorrichtung (15), die zum Ankoppeln eines Einsteckadapters (21) nach einem der Ansprüche 1 bis 8 ausgebildet ist.

## Claims

1. Plug-in adapter, comprising:
- a thread (20), which is designed to screw the plug-in adapter (21) to an adjustment instrument (18),
- a plug-in device (22), which is designed for releasably connecting the plug-in adapter (21) to a mating plug-in device (15) of an access opening (14) on a robot (1) for a reference position marking of the robot (1), and
- a stylus (23) which is designed to couple a measuring tip of the adjustment instrument (IS) to the reference position marking, the plug-in device (22) having a plug section (22a) which is used for axially plugging the plug section (22a) to the mating plug device (15) of the robot (1).

2. Plug-in adapter according to claim 1, **characterized in that** the plug-in section (22a) has a circular cylindrical jacket wall (30) which forms a mating surface which, when the plug-in adapter (21) is coupled to the mating plug-in device (15) of the robot (1) cooperates with a mating surface (24) of the mating connector (15), so that the plug-in adapter (21) is mounted on the mating connector (15) with sufficient accuracy with regard to the measuring accuracy of the adjustment instrument (18).

3. Plug-in adapter according to claim 1 or 2, **characterized in that** the plug-in adapter (21) has a securing means (25), which is designed to secure the plug-in adapter (21) in its coupled state to the mating plug-in device (15) of the robot (1) against unintentional detachment from the mating plug-in device (15).

4. Plug-in adapter according to claim 3, **characterized in that** the mating plug-in device (15) has a locking pin (17) and the plug-in device (22), the plug-in section (22a), or the circular cylindrical jacket wall (30) of the plug-in section (22a) has a groove (26) which has a first groove section (26.1) running at least substantially in the axial direction and a second groove section (26.2) which adjoins the first groove section (26.1) and runs at least essentially transversely to the axial direction, in which the locking pin (17) engages in a locking position of the plug-in adapter (21) .

5. Plug-in adapter according to claim 4, **characterized in that** the groove (26), in particular the second groove section (26.2), has a slope which is greater than the slope of the thread (20) arranged at the rear end (27.2) of the housing (27).

6. Plug-in adapter according to claim 5, **characterized in that** the second groove section (26.2) extends at an angle of less than 360 degrees, in particular less than 180 degrees, over the circumference of the jacket wall (30) of the plug-in section (22a).

7. Plug-in adapter according to one of Claims 1 to 6, **characterized in that** the plug-in adapter (21) has a housing (27) with a front end (27.1) and a rear end (27.2), wherein the thread (20) is arranged at the rear end (27.2) of the housing (27), the plug-in device (22) is arranged at the front end (27.1) of the housing (27), and the stylus (23) in the housing (27) of the plug-in adapter (21) is axially adjustable, wherein the stylus (23) has a probe tip (23a) and a pin end (23b) opposite to the probe tip (23a) and the stylus (23) is formed in a state coupled to the mating connector (15) of the robot (1) of the plug-in adapter (21) to feel the reference position marker with its probe tip (23a) and the pin end (23b) is designed to form a seat on which a measuring tip of the adjustment instrument (18) impinges, while being screwed onto the plug-in adapter (21) of the adjustment instrument(18).

8. Plug-in adapter according to one of Claims 1 to 7, **characterized in that** the plug-in adapter (21) has a housing (27) which has an outer contour, in particular in the form of an outer hexagon (28) or an outer square, which is designed as a turning attachment for a an open-end wrench, in particular for releasing the plug-in adapter (21) from the adjustment instrument (18) .

9. Adjustment instrument with a measuring tip, and in particular with a mating thread (19) corresponding to the thread (20) of the plug-in adapter (21) according to one of claims 1 to 8, comprising a plug-in adapter (21) according to one of claims 1 to 8.

10. Robot with a plurality of links (12), the links (12) having adjustable joints (11), and at least one access opening (14) for a reference position marking of at least one of the joints (11) of the robot (1), having a mating connector (15), which is designed for coupling a plug-in adapter (21) according to one of claims 1 to 8.

## Revendications

1. Adaptateur enfichable comprenant:
- un filetage (20), destiné à visser l'adaptateur enfichable (21) sur un instrument de réglage (18),
- un dispositif enfichable (22), qui est conçu pour connecter de façon amovible l'adaptateur enfichable (21) à un dispositif enfichable (15) correspondant d'une ouverture d'accès (14) sur un robot (1) pour référence marquage de position du robot (1), et
- un stylet (23) conçu pour coupler une pointe de mesure de l'instrument de réglage (18) au repère de position de référence, le dispositif enfichable (22) ayant une section de fiche (22a) qui est utilisée pour obturer axialement la fiche section (22a) au dispositif de prise d'accouplement (15) du robot (1).

2. Adaptateur enfichable selon la revendication 1, **caractérisé en ce que** la section enfichable (22a) a une paroi cylindrique circulaire de gaine (30) qui forme une surface de contact qui, lorsque l'adaptateur enfichable (21) est couplé à le dispositif enfichable d'accouplement (15) du robot (1) coopère avec une surface d'accouplement (24) du connecteur d'accouplement (15), de sorte que l'adaptateur enfichable (21) est monté sur le connecteur d'accouplement (15) avec une précision suffisante par rapport à la précision de mesure de l'instrument de réglage (18).

3. Adaptateur enfichable selon la revendication 1 ou 2, **caractérisé en ce que** l'adaptateur enfichable (21) présente un moyen de fixation (25), qui est conçu pour fixer l'adaptateur enfichable (21) dans son état couplé à le dispositif enfichable d'accouplement (15) du robot (1) contre tout détachement involontaire du dispositif enfichable d'accouplement (15).

4. Adaptateur enfichable selon la revendication 3, **caractérisé en ce que** le dispositif enfichable d'accouplement (15) a une broche de verrouillage (17) et le dispositif enfichable (22), la section enfichable (22a), ou la paroi cylindrique circulaire de l'enveloppe (30) de la section enfichable (22a) a une rainure (26) qui a une première section de rainure (26.1) s'étendant au moins sensiblement dans la direction axiale et une seconde section de rainure (26.2) qui jouxte la première section de rainure (26.1) et s'étend au moins essentiellement transversalement à la direction axiale, dans laquelle la goupille de verrouillage (17) s'engage dans une position de verrouillage de l'adaptateur enfichable (21).

5. Adaptateur enfichable selon la revendication 4, **caractérisé en ce que** la rainure (26), en particulier la deuxième section de rainure (26.2), a une pente qui est supérieure à la pente du filetage (20) disposé à l'extrémité arrière (27.2) du boîtier (27).

6. Adaptateur enfichable selon la revendication 5, **caractérisé en ce que** la deuxième section de rainure (26.2) s'étend à un angle inférieur à 360 degrés, en particulier inférieur à 180 degrés, sur la circonférence de la paroi de gaine (30) du section enfichable (22a).

7. Adaptateur enfichable selon l'une des revendications 1 à 6, **caractérisé en ce que** l'adaptateur enfichable (21) présente un boîtier (27) avec une extrémité avant (27.1) et une extrémité arrière (27.2), dans lequel le filetage (20) est disposé à l'extrémité arrière (27.2) du boîtier (27), le dispositif enfichable (22) est disposé à l'extrémité avant (27.1) du boîtier (27) et le stylet (23) dans le boîtier (27) de l'adaptateur enfichable (21) est réglable axialement, le stylet (23) ayant une pointe de sonde (23a) et une extrémité de broche (23b) opposée à la pointe de sonde (23a) et au stylet (23) est formé dans un état couplé au connecteur d'accouplement (15) du robot (1) de l'adaptateur enfichable (21) pour sentir le marqueur de position de référence avec sa pointe de sonde (23a) et l'extrémité de broche (23b) est conçu pour former un siège sur lequel une pointe de mesure de l'instrument de réglage (18) frappe, tout en étant vissé sur l'adaptateur enfichable (21) de l'instrument de réglage (18).

8. Adaptateur enfichable selon l'une des revendications 1 à 7, **caractérisé en ce que** l'adaptateur enfichable (21) présente un boîtier (27) qui présente un contour extérieur, notamment sous la forme d'un hexagone extérieur (28) ou d'un carré extérieur, qui est conçu comme un accessoire tournant pour une clé à fourche, en particulier pour libérer l'adaptateur enfichable (21) de l'instrument de réglage (18).

9. Instrument de réglage à pointe de mesure, et notamment à filetage mâle (19) correspondant au filetage (20) de l'adaptateur enfichable (21) selon l'une des revendications 1 à 8, comprenant un adaptateur enfichable (21) selon l'une des revendications 1 à 8.

10. Robot à plusieurs maillons (12), les maillons (12) ayant des articulations réglables (11) et au moins une ouverture d'accès (14) pour un repère de position de référence d'au moins une des articulations (11) du robot (1), ayant un connecteur d'accouplement (15), qui est conçu pour coupler un adaptateur enfichable (21) selon l'une des revendications 1 à 8.
